# EUROPEAN PATENT SPECIFICATION

(11) **EP 2 987 999 B1**
(45) Date of publication and mention of the grant of the patent: **20.02.2019**
(21) Application number: 14181959.9
(22) Date of filing: 22.08.2014
(51) Int. Cl.: F03D 13/10, F03D 80/00

(54) **Device and method for turning a rotor of a wind turbine**
Vorrichtung und Verfahren zum Drehen eines Windturbinenrotors
Dispositif et procédé de rotation d'un rotor d'une éolienne

(43) Date of publication of application: 24.02.2016
(73) Proprietor: Areva Wind GmbH, 27572 Bremerhaven (DE)
(72) Inventor: Meimann, Valentin Dr.-Ing., 48429 Rheine (DE); Mtauweg, Samer Dr., 27568 Bremerhaven (DE); Arndt, Joachim, 27612 Loxstedt (DE)
(74) Representative: Prinz & Partner mbB

(56) References cited:
- EP-A2- 1 167 754
- EP-A2- 2 667 026
- WO-A2-2010/020563
- US-A1- 2008 181 761
- US-A1- 2011 260 461
- US-A1- 2012 133 147

## Description

### FIELD OF THE INVENTION

The invention relates to a device for turning a rotor of a wind turbine. Furthermore, the invention relates to a method for turning a rotor of a wind turbine.

### BACKGROUND

In recent years it has become more and more common to install the rotor blades of a wind turbine individually, i. e. one at a time, to the hub which is already mounted on the wind turbine tower. This so-called single blade installation procedure provides many benefits, and maintenance is more economic when a single blade can be replaced right on the spot instead of having to take down the entire rotor arrangement. However, it has to be considered that usually the drivetrain of a wind turbine can only be rotated when either none or all rotor blades are installed. This means that after installation of the first blade, the installation positions for the further rotor blades are fixed.

Thus, there is a need to actively rotate the rotor to simplify the single blade installation procedure. More specifically, in case of three rotor blades to be installed it would be preferable to rotate the rotor by at least 120° in opposite directions in order to enable a horizontal installation of the blades in three equidistant positions.

Of course, it is possible to rotate the rotor from the driven side (output side), either by using the generator or an additional gear motor as a drive. The drawback of this method is that the gear of the wind turbine lies within the load flow during installation of the blades. This may result in an overload of the gear.

Another possibility is installing the blades prior to the gearbox. However, this requires heavy and complex hydraulic aggregates which are expensive and difficult to handle.

EP 2 573 384 A1, which relates to a technique of rotating the rotor of a wind turbine, addresses the need for active rotation of the hub to defined positions to establish the connections between the hub and the rotor blades during erection of the wind turbine. Although no specific setup is described in detail, it is mentioned that the rotor comprises a brake-disc with at least one or more motors acting on the brake disc in order to rotate the rotor. The motors are detachably mounted in the neighborhood of brake calipers. Further, the brake disc may comprise a toothed rim to interact with a pinion or a belt to provide a better power transmission than a normal friction drive.

EP 1 167 754 A2 relates to a turning device for the rotor of a wind turbine with a tool for driving a shaft coupled to the rotor of the wind turbine. The tool, which can be an electrically operated tool like a torque screwdriver, for example, is mounted to a support element. A pinion coupled to the shaft of the tool engages the toothed brake disc or a cogwheel coupled to the brake disc.

WO 2010/20563 A2 relates to a device for adjusting the rotation angle position of the rotor of a wind energy system with a force transducing wheel disposed as an independent component on a shaft in the drive train. The means for transmitting the drive force of a drive motor via a force transmitting wheel to the force transducing wheel may include a chain or a toothed belt engaging the force transducing wheel.

US 2008/0181761 A1 discloses a turning gear assembly in a nacelle of a wind turbine. The turning gear assembly includes a gear motor coupled to a pinion gear which engages the teeth of a brake disc mounted on a high-speed shaft. The turning gear assembly is removably attached to a housing of a gearbox and/or another portion within the nacelle of the wind turbine.

It is an object of the invention to provide a simple solution for rotating the rotor of a wind turbine in an effective and controllable manner without the risk of any components being damaged.

### SUMMARY

According to the invention, a device for turning a rotor of a wind turbine comprises a brake disc of the wind turbine which is coupled to the rotor, and a drive means for driving a force transmission means. The device further comprises a toothed segment which is coupled to the brake disc. The force transmission means is in engagement or engageable with the toothed segment.

Normally, a disc brake in a wind turbine is used to help slow down and stop the turbine in an emergency situation or to assist in holding the turbine at rest for maintenance. The brake disc comprises calipers with brake pads which can be operated to act on the brake disc. The invention makes use of the finding that actively driving the brake disc, which is non-rotatably coupled to the rotor (i. e. there is never any relative rotational movement between the brake disc and the rotor), is an expedient technique for rotating the rotor during the blade installation process. The general idea of the invention lies in the simple but effective coupling of a drive force to the brake disc without putting stress on the already installed gear of the wind turbine. Only a few simple components are required which can be temporarily retrofitted for the time of the blade installation. Basically, only three components are required for the device according to the invention: a toothed segment to be coupled to the brake disc, a force transmission means in engagement or engageable with the toothed segment, and a drive means for driving the force transmission means. These components only require little space and can be detached after all blades have been installed. Since the toothed segment can be rotated in a controlled manner when using an appropriate drive means like a stepper motor, a precise rotation of the rotor through specified angles can be obtained.

It is to be understood that the toothed segment may comprise several separate sections that are assembled together or placed accordingly to form the toothed segment as a whole.

Although other locations for coupling the toothed segment to the brake disc are generally possible, the outer periphery of the brake disc is preferred for several reasons. First, the torque transmission is most effective when the toothed segment is placed at the outermost portion of the brake disc. Second, the outer periphery of the brake disc is usually better accessible than the sides of the brake disc.

According to a first embodiment of the invention, the force transmission means includes a pinion. With a pinion a very compact design of the device is possible. In particular, the pinion can be directly attached to the output shaft of an electrical motor, preferably a stepper motor. The very same pinion can also be used to engage the toothed segment.

It is most effective to mount the pinion to a fixed part of the wind turbine, e. g. a housing, in an orientation such that the pinion is rotatable about an axis parallel to the axis of rotation of the brake disc. Thus, the inevitable losses in the force transmission can be kept at a minimum.

According to a second embodiment of the invention, the force transmission means includes a toothed belt. With a toothed belt more teeth of the toothed segment can be engaged at the same time. This results in a more uniform distribution of the load along the toothed segment.

The actual course of the toothed belt can be influenced by providing a set of rollers for guiding the toothed belt as desired. Especially, the rollers can be used to guide the toothed belt away from any calipers that are present during the forced rotation of the rotor.

Generally, it is not necessary that the toothed segment completely surrounds the brake disc. In fact, the toothed segment may correspond to an arc with a central angle equal to or of less than 360°. Providing a toothed segment of 360° makes operations very easy offshore because the rotor can be rotated to any position as desired, depending on available place, ship positioning with respect to the turbine, position of the other blades, etc. Basically, a 360° segment allows most flexibility. However, a toothed segment of less than 360° may be sufficient for certain conditions or applications as will be explained below.

In case that three equidistant blades are to be installed or uninstalled, the central angle should amount to at least 120°. When the drive means, the force transmission means and the toothed segment are positioned appropriately, all three installation sites on the rotor can be moved to a position where a horizontal installation of the respective blade is possible. In practice, it is advisable to provide a "reserve" at both ends of the toothed segment to ensure that the toothed segment does not disengage from the force transmission means in the extreme positions. Thus, the toothed segment preferably corresponds to an arc with a central angle of about 140°. However, depending on the number of blades and the specific application of the invention, a toothed segment of less than 120° may be enough, e. g. even a toothed segment with a central angle of about 60°.

The drive means can be an electrical motor, a hydraulic motor, or an air pressure motor, for example.

The invention also provides a method of turning a rotor of a wind turbine, using the device as described above. The method comprises the following steps:
- attaching the toothed segment to the brake disc;
- attaching the drive means to a fixed part of the wind turbine;
- coupling a force transmission means to the drive means and to the toothed segment; and
- operating the drive means to rotate the rotor to predetermined positions.

With the method according to the invention it is easy to rotate the rotor to the desired installation or uninstallation positions without stressing the gear of the wind turbine as described above.

The following considerations mainly refer to legacy brake discs of wind turbines, i. e. brake discs that were designed before the present invention.

Typically, disc brakes of wind turbines include a plurality of brake calipers disposed around the brake disc. Some of the legacy calipers may prohibit an adequate mounting and turning of the toothed segment. Therefore, it is expedient to remove those calipers before attaching the toothed segment.

After installing blades to the rotor or uninstalling blades from the rotor the toothed segment and/or the force transmission means and/or the drive means may be removed and used for installation/uninstallation purposes in another wind turbine.

Any removed calipers should be re-installed after the toothed segment is removed at the end of the installation or uninstallation procedure.

The invention also provides a wind turbine, comprising a rotor and a device for turning the rotor as described above.

### BRIEF DESCRIPTION OF DRAWINGS

Further features and advantages of the invention will become apparent from the following description and from the accompanying drawings to which reference is made. In the drawings:
Figure 1 shows a front view of an uncovered nacelle of a wind turbine with a device for turning the rotor of the wind turbine according to a first embodiment of the invention;
Figure 2 shows the enlarged detail A of Figure 1;
Figure 3 shows a further enlarged perspective view of detail A; and
Figure 4 shows a schematic sketch of a device for turning the rotor of a wind turbine according to a second embodiment of the invention.

### DETAILED DESCRIPTION OF EXAMPLE EMBODIMENTS

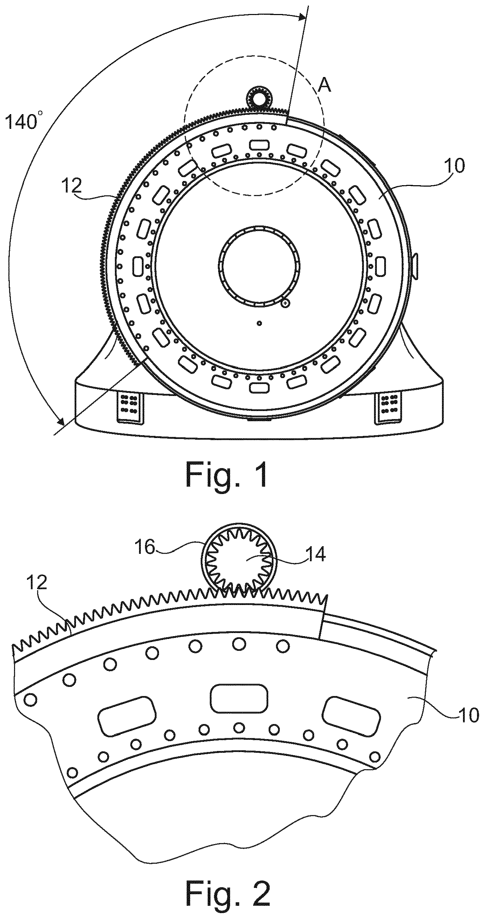

In Figures 1 to 3 a first embodiment of a device for turning the rotor of a wind turbine is shown.

A brake disc 10 is coupled to the rotor in a non-rotatable manner, i. e. no relative rotational movement occurs between the brake disc and the rotor.

The same is true for the brake disc 10 and a toothed segment 12 which is coupled to the outer periphery of the brake disc 10. The toothed segment 12 represents an arc of a circle. The inner radius of the toothed segment 12 basically corresponds to the outer radius of the brake disc 10. The arc covers an angle of about 140° as can be seen in Figure 1. The toothed segment 12 is provided with external teeth basically over its entire arc length.

In the example depicted in Figure 1 the toothed segment 12 extends from the 8 o'clock position to the 12 o'clock position, corresponding to an angle of 120°, with a 10° overlap at both ends.

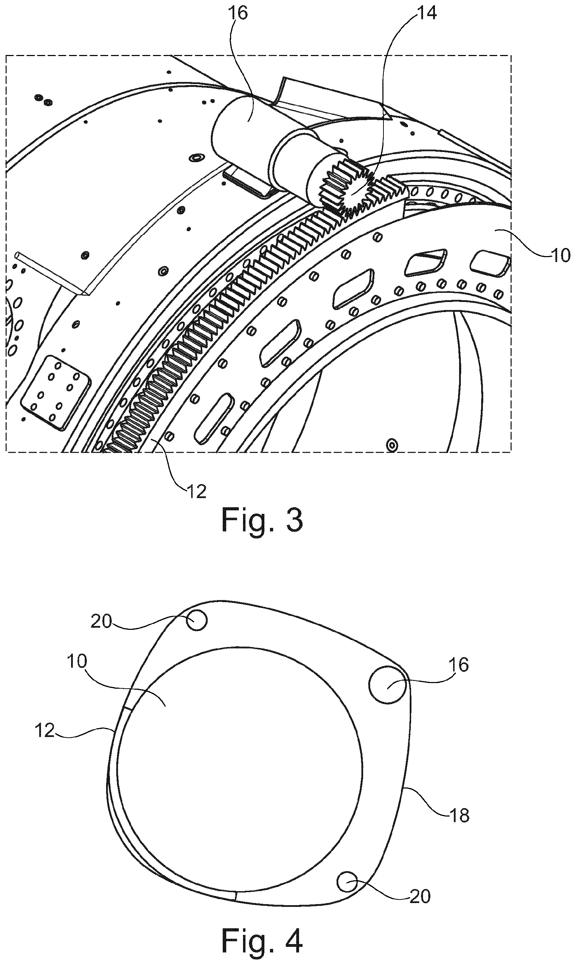

At the 12 o'clock position a pinion 14 is mounted to a fixed (i. e. non-rotating) part of the wind turbine. The pinion 14 itself can be rotated by a drive means 16 (see Figure 3), e. g. a stepper motor, about an axis which is parallel to the axis of rotation of the rotor and the brake disc 10. The pinion 14 has external teeth engaging the external teeth of the toothed segment 12.

By driving the pinion 14 the brake disc 10, and thus the rotor, can be rotated, as long as the teeth of the pinion 14 and the teeth of the toothed segment 12 are in mutual engagement. With the configuration shown in Figure 1 it is possible to rotate the rotor about a total angle of at least 120°.

Still with reference to Figure 1, it is assumed that three blades need to be installed at the 1 o'clock, 5 o'clock and 9 o'clock positions, respectively, and horizontal installation of the blades is desired. Since the 9 o'clock position already allows a horizontal installation, the first blade can be installed right away. Then the brake disc 10 is rotated 60° in clockwise direction. The former 1 o'clock position of the rotor has now become the 3 o'clock position which allows a horizontal installation of the second blade on the other side. Finally, the brake disc 10 is rotated further 60° in clockwise direction, i. e. 120° in total. Thereby, the original 5 o'clock installation site is now at the 9 o'clock position, and the third blade can be installed horizontally.

From the above example it is apparent how, in general, the toothed segment 12 and the pinion 14 are to be positioned relative to the installation sites of the rotor. Of course, the minimum toothed arc length of the toothed segment 12 has to be adapted if a different number of blades is to be installed. For example, in case of four equidistant blades, the toothed segment 12 would need to cover a minimum angle of 90°.

During installation it is to be ensured that the toothed segment does not interfere with a caliper of the disc brake. Therefore, in a legacy disc brake it may be necessary to temporarily remove one or more calipers in an area corresponding to the arc length of the toothed segment 12 before the toothed segment 12, the pinion 14 and the drive means 16 are mounted. After the blade installation is completed, the toothed segment 12, the pinion 14 and the drive means 16 can be easily detached, and the removed calipers can then be re-installed.

Considering the above, new wind turbine disc brakes can be designed such that no calipers need to be removed at all, simply by keeping a sufficient angle range of the brake disc 10 clear of calipers in the brake disc design. In this case the components of the rotor turning device may remain at the wind turbine permanently in view of future maintenance.

In Figure 4 a second embodiment of a device for turning the rotor of a wind turbine is shown schematically.

Similar to the first embodiment a toothed segment 12 is coupled to the outer periphery of the brake disc 10. However, the toothed segment 12 is not engaged by a pinion but by a closed toothed belt 18. The toothed belt 18 has internal teeth over its entire length.

The toothed belt 18, in particular its internal toothing, is also engaged by a drive means 16 which is preferably positioned away from the toothed segment 12. The drive means 16 may be a stepper motor equipped with a toothed pinion engaging the toothed belt 18.

The toothed belt 18 is guided by several rollers 20 which may be provided with external teeth. The rollers 20 ensure that the belt 18 is kept away from the calipers which are (still) present during the blade installation process.

Yet the toothed belt 18 engages the toothed segment 12 over a significant length. This means that - compared to the pinion 14 used in the first embodiment - more teeth are simultaneously in engagement with the toothed segment 12 during rotation of the rotor.

The dimensions of the toothed segment 12 and the course of toothed belt 18 are determined such that a sufficient rotation of the rotor is feasible, i. e. such that a horizontal installation of all blades is possible, as explained before.

Both embodiments have in common that a force transmission means is used to impart the driving force of the drive means 16 to the toothed segment 12 which is coupled to the brake disc 10. In the first embodiment the force transmission means is represented by the pinion 14, in the second embodiment it is mainly represented by the toothed belt 18. Further components may be included in the force transmission means.

Having described the invention with respect to installing rotor blades to a rotor of a wind turbine, the same principles also apply with respect to uninstalling the blades from the rotor, e. g. for maintenance.

## Claims

1. A device for turning a rotor of a wind turbine, the device comprising a brake disc (10) of the wind turbine which is coupled to the rotor, and a drive means (16) for driving a force transmission means,
**characterized in that** a detachable toothed segment (12) is coupled to the brake disc (10) of the wind turbine, the force transmission means being in engagement or engageable with the toothed segment (12).

2. The device according to claim 1, **characterized in that** the toothed segment (12) is coupled to the outer periphery of the brake disc (10).

3. The device according to claim 1 or 2, **characterized in that** the force transmission means includes a pinion (14).

4. The device according to claim 3, **characterized in that** pinion (14) is mounted to a fixed part of the wind turbine and is rotatable about an axis parallel to the axis of rotation of the brake disc (10).

5. The device according to claim 1 or 2, **characterized in that** the transmission means includes a toothed belt (18).

6. The device according to claim 5, **characterized in that** the toothed belt (18) is guided by rollers (20).

7. The device according to any of the preceding claims, **characterized in that** the toothed segment (12) corresponds to an arc with a central angle of 360°.

8. The device according to any of the claims 1 to 6, **characterized in that** the toothed segment (12) corresponds to an arc with a central angle of less than 360°, preferably at least 120° and more preferably about 140°.

9. The device according to any of the preceding claims, **characterized in that** the drive means (16) is one of the following; an electrical motor, a hydraulic motor, an air pressure motor.

10. A method of turning a rotor of a wind turbine, using the device according to any of the preceding claims, the method being **characterized by** the following steps:
- attaching the toothed segment (12) to the brake disc (10);
- attaching the drive means (16) to a fixed part of the wind turbine;
- coupling a force transmission means to the drive means (16) and to the toothed segment (12); and
- operating the drive means (16) to rotate the rotor to predetermined positions.

11. The method according to claim 10, **characterized in that** brake calipers associated to the brake disc (10) are removed before attaching the toothed segment (12).

12. The method according to claim 10 or 11, **characterized in that** the toothed segment (12) and/or the force transmission means and/or the drive means (16) are removed after installing blades to the rotor or uninstalling blades from the rotor.

13. The method according to claims 10 to 12, **characterized in that** the calipers are re-installed after the toothed segment (12) is removed.

14. A wind turbine, comprising a rotor and a device for turning the rotor according to any of claims 1 to 9.

## Patentansprüche

1. Vorrichtung zum Drehen eines Rotors einer Windenergieanlage, wobei die Vorrichtung eine mit dem Rotor gekoppelte Bremsscheibe (10) der Windenergieanlage und eine Antriebseinrichtung (16) zum Antreiben einer Kraftübertragungseinrichtung umfasst,
**dadurch gekennzeichnet, dass** ein abnehmbares Zahnsegment (12) mit der Bremsscheibe (10) der Windenergieanlage gekoppelt ist, wobei die Kraftübertragungseinrichtung mit dem Zahnsegment (12) in Eingriff steht oder damit in Eingriff gebracht werden kann.

2. Vorrichtung nach Anspruch 1, **dadurch gekennzeichnet, dass** das Zahnsegment (12) mit dem Außenumfang der Bremsscheibe (10) gekoppelt ist.

3. Vorrichtung nach Anspruch 1 oder 2, **dadurch gekennzeichnet, dass** die Kraftübertragungseinrichtung ein Ritzel (14) aufweist.

4. Vorrichtung nach Anspruch 3, **dadurch gekennzeichnet, dass** das Ritzel (14) an einem festen Teil der Windenergieanlage angebracht und um eine zur Drehachse der Bremsscheibe (10) parallele Achse drehbar ist.

5. Vorrichtung nach Anspruch 1 oder 2, **dadurch gekennzeichnet, dass** die Übertragungseinrichtung einen Zahnriemen (18) aufweist.

6. Vorrichtung nach Anspruch 5, **dadurch gekennzeichnet, dass** der Zahnriemen (18) über Rollen (20) geführt ist.

7. Vorrichtung nach einem der vorhergehenden Ansprüche, **dadurch gekennzeichnet, dass** das Zahnsegment (12) einem Bogen mit einem Mittelpunktswinkel von 360° entspricht.

8. Vorrichtung nach einem der Ansprüche 1 bis 6, **dadurch gekennzeichnet, dass** das Zahnsegment (12) einem Bogen mit einem Mittelpunktswinkel von weniger als 360°, vorzugsweise wenigstens 120° und bevorzugter etwa 140° entspricht.

9. Vorrichtung nach einem der vorhergehenden Ansprüche, **dadurch gekennzeichnet, dass** die Antriebseinrichtung (16) eine aus den folgenden ist: ein Elektromotor, ein Hydraulikmotor, ein Druckluftmotor.

10. Verfahren zum Drehen eines Rotors einer Windenergieanlage unter Verwendung der Vorrichtung nach einem der vorhergehenden Ansprüche, wobei das Verfahren durch die folgenden Schritte gekennzeichnet ist:
- Befestigen des Zahnsegments (12) an der Bremsscheibe (10),
- Befestigen der Antriebseinrichtung (16) an einem festen Teil der Windenergieanlage,
- Koppeln einer Kraftübertragungseinrichtung mit der Antriebseinrichtung (16) und dem Zahnsegment (12), und
- Betätigen der Antriebseinrichtung (16), um den Rotor in vorbestimmte Stellungen zu drehen.

11. Verfahren nach Anspruch 10, **dadurch gekennzeichnet, dass** der Bremsscheibe (10) zugeordnete Bremssättel vor dem Befestigen des Zahnsegments (12) abgenommen werden.

12. Verfahren nach Anspruch 10 oder 11, **dadurch gekennzeichnet, dass** das Zahnsegment (12) und/oder die Kraftübertragungseinrichtung und/oder die Antriebseinrichtung (16) nach der Montage von Blättern am Rotor oder der Demontage von Blättern vom Rotor entfernt werden.

13. Verfahren nach den Ansprüchen 10 bis 12, **dadurch gekennzeichnet, dass** die Bremssättel nach dem Entfernen des Zahnsegments (12) wieder eingebaut werden.

14. Windenergieanlage mit einem Rotor und einer Vorrichtung zum Drehen des Rotors nach einem der Ansprüche 1 bis 9.

## Revendications

1. Dispositif pour faire tourner un rotor d'une éolienne, le dispositif comportant un disque de frein (10) de l'éolienne qui est couplé au rotor et un moyen d'entraînement (16) pour l'entraînement d'un moyen de transmission de force,
**caractérisé en ce qu'**un segment denté détachable (12) est couplé au disque de frein (10) de l'éolienne, le moyen de transmission de force étant en engagement ou étant apte à être amené en engagement avec le segment denté (12).

2. Dispositif selon la revendication 1, **caractérisé en ce que** le segment denté (12) est couplé à la périphérie extérieure du disque de frein (10).

3. Dispositif selon la revendication 1 ou 2, **caractérisé en ce que** le moyen de transmission de force présente un pignon (14).

4. Dispositif selon la revendication 3, **caractérisé en ce que** le pignon (14) est monté sur une partie fixe de l'éolienne et est rotatif autour d'un axe parallèle à l'axe de rotation du disque de frein (10).

5. Dispositif selon la revendication 1 ou 2, **caractérisé en ce que** le moyen de transmission présente une courroie dentée (18).

6. Dispositif selon la revendication 5, **caractérisé en ce que** la courroie dentée (18) est guidée par des galets (20).

7. Dispositif selon l'une des revendications précédentes, **caractérisé en ce que** le segment denté (12) correspond à un arc présentant un angle au centre de 360°.

8. Dispositif selon l'une des revendications 1 à 6, **caractérisé en ce que** le segment denté (12) correspond à un arc présentant un angle au centre inférieur à 360°, de préférence d'au moins 120°, et de manière plus préférée d'environ 140°.

9. Dispositif selon l'une des revendications précédentes, **caractérisé en ce que** le moyen d'entraînement (16) est l'un des suivants : un moteur électrique, un moteur hydraulique, un moteur à air comprimé.

10. Procédé pour faire tourner un rotor d'une éolienne en utilisant le dispositif selon l'une des revendications précédentes, le procédé étant **caractérisé par** les étapes suivantes :
- attacher le segment denté (12) au disque de frein (10) ;
- attacher le moyen d'entraînement (16) à une partie fixe de l'éolienne ;
- coupler un moyen de transmission de force au moyen d'entraînement (16) et au segment denté (12) ; et
- mettre en oeuvre le moyen d'entraînement (16) pour tourner le rotor dans des positions prédéterminées.

11. Procédé selon la revendication 10, **caractérisé en ce que** des étriers de frein associés au disque de frein (10) sont retirés avant d'attacher le segment denté (12).

12. Procédé selon la revendication 10 ou 11, **caractérisé en ce que** le segment denté (12) et/ou le moyen de transmission de force et/ou le moyen d'entraînement (16) sont retirés après le montage de pales sur le rotor ou le démontage de pales du rotor.

13. Procédé selon les revendications 10 à 12, **caractérisé en ce que** les étriers sont de nouveau montés après le retrait du segment denté (12).

14. Éolienne, comprenant un rotor et un dispositif pour faire tourner le rotor selon l'une des revendications 1 à 9.
